(19) **Europäisches Patentamt**

**European Patent Office**

**Office européen des brevets**

(11) Veröffentlichungsnummer: **0 258 745 B1**

(12) # EUROPÄISCHE PATENTSCHRIFT

(45) Veröffentlichungstag der Patentschrift: **02.12.92**

(51) Int. Cl.⁵: **G03B** 27/46, G06K 1/12

(21) Anmeldenummer: **87112071.3**

(22) Anmeldetag: **20.08.87**

(54) **Verfahren zur Überwachung der Verfilmung von Vorlagen in einer Mikrofilmkamera sowie Mikrofilmkamera zur Durchführung des Verfahrens.**

(30) Priorität: **02.09.86 DE 3629760**
**09.05.87 DE 3715501**

(43) Veröffentlichungstag der Anmeldung:
**09.03.88 Patentblatt 88/10**

(45) Bekanntmachung des Hinweises auf die
Patenterteilung:
**02.12.92 Patentblatt 92/49**

(84) Benannte Vertragsstaaten:
**AT BE CH ES FR GB IT LI LU NL SE**

(56) Entgegenhaltungen:
**EP-A- 0 096 388**
**US-A- 4 116 560**

(73) Patentinhaber: **Agfa-Gevaert AG**

**W-5090 Leverkusen 1(DE)**

(72) Erfinder: **Weinzierl, Manfred, Prof.**
**Stock-Strasse 4**
**W-8068 Pfaffenhofen(DE)**
Erfinder: **Zieran, Eberhard, Ing. grad.**
**Hubert-Hopf-Strasse 4**
**W-8022 Grünwald(DE)**

## Beschreibung

Die Erfindung betrifft ein Verfahren zur Überwachung der Verfilmung von Vorlagen in einer einen Paginierer und eine Belichtungsstation aufweisenden Mikrofilmkamera, wobei die Vorlagen zunächst im Paginierer mit Nummernfolgen versehen werden und anschließend in der Belichtungsstation verfilmt werden, wobei auf dem Film für jedes Filmbild einer Vorlage ein Blip aufbelichtet wird und wobei in einer Vergleichseinrichtung auf Übereinstimmung der Vorlagen mit den zugeordneten Filmbildern der Vorlagen verglichen wird und bei Nichtübereinstimmung ein Fehlersignal erzeugt wird, sowie eine Mikrofilmkamera zur Durchführung des Verfahrens.

Aus der EP-A-0 096 388 ist ein Verfahren zur ungeordneten Verfilmung von Belegen sowie eine Vorrichtung zur Durchführung dieses Verfahrens beschrieben. Zur ungeordneten Verfilmung von Belegen werden diese zunächst paginiert und anschließend unter Zuordnung eines Blip-Impulskodes durch Aufbelichten von Blip-Impulsen verfilmt. Im Paginierwerk wird eine Ziffernfolge eingestellt. Diese Ziffernfolge enthält Ziffern, die jeweils der Bildadresse eines Bildes auf dem Film entsprechen. Die Blip-Impulse werden fortlaufend registriert, aufsummiert und zwischengespeichert. Während der Belichtung des Films mit dem jeweiligen Beleg werden die der jeweiligen Bildadresse entsprechenden Ziffern der Ziffernfolge mit den Blip-Impulsen des Filmbildes des Beleges auf Übereinstimmung verglichen.

Diese Maßnahmen dienen dazu, daß diejenigen Fehler vermieden werden sollen, die bei der Paginierung und anschließenden Verfilmung auftreten können. Diese Fehler sollen durch Schaffung einer eindeutigen Zuordnung der Belegadresse und der Filmbildadresse beseitigt werden. Das bedeutet, daß eine definitive Zuordnung zwischen Vorlage und zugeordnetem Filmbild der Vorlage geschaffen wird derart, daß der Blip für einen Beleg erst dann in einem Vergleichsvorgang mit dem zugeordneten Adressensignal des Beleges verglichen wird, wenn sich der betreffende Beleg in der Belichtungsstation zur Verfilmung befindet.

Bei nicht vernachlässigbarem zeitlichen Abstand zwischen dem Paginierwerk und der Belichtungsstation müssen die Ziffern der Bildadresse der Paginier-Ziffernfolge entsprechend verzögert werden, um diese Bedingung zu erfüllen. Daher wird eine Synchronität zwischen Beleg und Filmbild des Beleges hinsichtlich der zugeordneten Ziffern und des zugeordneten Blips hergestellt.

Dieses Verfilmungsverfahren sowie die zugeordnete Mikrofilmaufnahmekamera weisen den Nachteil auf, daß einerseits der Vergleichsvorgang zwischen den Ziffern der Ziffernfolge und den Blip-Impulsen für jeden Beleg einzeln durchgeführt wird und daß darüber hinaus dieser Vergleichsvorgang individuell für jeden einzelnen Beleg verzögert wird. Zwar werden hierdurch mit größerer Sicherheit die Paginierziffernfolge und die Blip-Ziffernfolge belegweise auf eventuelle Fehler überwacht. Jedoch ist hiermit der schwerwiegende Nachteil verbunden, daß der Durchlauf des jeweiligen Beleges erst dann erfolgen kann, wenn beim vorangegangenen Beleg mit der entsprechenden Verzögerung die zugehörige Paginierziffernfolge mit der entsprechenden Blip-Ziffernfolge verglichen worden sind und sich der betreffende Beleg gerade in der Belichtungsstation befindet. Dies wiederum hat den Nachteil, daß auf der Strecke zwischen dem Paginierwerk und der Belichtungsstation nicht nacheinander in ununterbrochener Folge mehrere Belege gleichzeitig hintereinander durchlaufen dürfen. Dieses bekannte Verfahren und die zugeordnete Mikrofilmkamera zur Durchführung des Verfahrens weisen daher den großen Nachteil auf, daß keine Hochgeschwindigkeitsverfilmungen von Belegen durchgeführt werden können. Auch ist es nachteilig, daß eine Verzögerungsschaltung notwendig ist, um für jeden einzelnen Beleg sicherzustellen, daß der Vergleich zwischen der Ziffernfolge dieses Beleges und dem Blip-Signal in der Belichtungsstation erst dann stattfindet, wenn sich dieser Beleg gerade in der Belichtungsstation befindet.

Demgegenüber liegt nun der Erfindung die Aufgabe zugrunde, ein Verfahren zur Überwachung der Verfilmung von Vorlagen der eingangs genannten Art sowie eine Mikrofilmkamera zur Durchführung des Verfahrens zu schaffen, das bzw. die eine reibungslose und schnelle Verfilmung von beliebigen Vorlagen gestattet, wobei zugunsten der Verfilmungsgeschwindigkeit auf einen vorlagenweisen Vergleich der Vorlagenadresse und der Bildadresse der Vorlage verzichtet werden soll. Evtl. beim Durchlauf der Vorlagen durch das Paginierwerk und anschließend durch die Belichtungsstation auftretende Fehler sollen nicht bereits während ihres Auftretens signalisiert werden. Demnach soll für einen schnellen Durchlauf großer Stapel von in ununterbrochener Folge beförderten Vorlagen, von denen mehrere hintereinander zwischen dem Paginierwerk und der Belichtungsstation transportiert werden, auf das Nachvollziehen jeder Einzelvorlage verzichtet werden.

Diese Aufgabe wird erfindungsgemäß einerseits durch die kennzeichnenden Merkmale des Anspruchs 1 als auch durch die kennzeichnenden Merkmale des Anspruchs 7 gelöst.

In vorteilhafter Weise ist es möglich, daß eine Kontrolle der Übereinstimmung in der Vergleichseinrichtung jeweils nach der Speicherung der vorgegebenen Anzahl der kodierten Belegsignale und der Blipsignale erfolgt, wobei bei Feststellung der Übereinstimmung die zugehörigen Zwischenspeicher zurückgesetzt werden, um dann bei der folgenden Gruppe der Vorlagen erneut mit Signalen geladen zu werden. Tritt beim Paginieren und/oder beim anschließenden Verfilmen in der Belichtungsstation ein Fehler auf, dann wird dieser zwar erst im nachfolgenden Vergleichsvorgang nach der vorgegebenen Anzahl der Vorlagen detektiert. Dies bedeutet, daß die einzelne Vorlage nicht zeitlich nachvollzogen wird. Jedoch ergibt sich der Vorteil, daß eine Hochgeschwindigkeitsverfilmung durchgeführt werden kann. Ein eventueller Fehler wird spätestens beim Vergleichsvorgang festgestellt. In vorteilhafter Weise liegt jeder Nummernbereich und jeder zugeordnete Blip-Typ bzw. jede Blip-Typ-Kombination in entsprechend kodierter Signalform vor.

Gemäß weiterer Ausbildung werden zumindest einige der Nummernbereiche und der zugeordneten Blip-Typen durch den Vorlagen vorangeschickte Steuerkarten initiiert, wobei nach Durchlauf einer Steuerkarte der Vergleich auf Übereinstimmung erfolgt.

In vorteilhafter Weise wird auf jeder Vorlage am Paginierer die Nummernfolge des Nummernbereiches und die zugeordnete Blip-Folge des Blip-Typs in ASCII-kodierter Form als ASCII-Zeichen vorlagenweise gespeichert. Erst am Ende der Verfilmung eines Vorlagenstapels oder einer vorbestimmten Anzahl von Vorlagen wird ein Paket von ASCII-Zeichen im Zwischenspeicher und ein zweites Paket von ASCII-Zeichen im zweiten Zwischenspeicher auf Gleichheit der ASCII-Zeichenart auf der einen Seite und der ASCII-Zeichenzahl auf der anderen Seite verglichen.

Sowohl bei Gleichheit der ASCII-Zeichenart und ASCII-Zeichenzahl in beiden Zwischenspeichern wird konstatiert, daß deren Zuordnung zu den einzelnen Mikrofilmbildern richtig ist. Auf die Kontrolle der Zuordnung von Ziffern der Ziffernfolge des Paginierers und der Blip-Zahlen je Vorlage wird bewußt zugunsten der Verfilmungsgeschwindigkeit verzichtet. Die hierbei gegebene geringe Unsicherheit wird in Kauf genommen, um die Vorlagen mit großer Geschwindigkeit ohne Wartezeiten zwischen den einzelnen Vorlagen verfilmen zu können. Evtl. auftretende Fehler werden am Ende der Verfilmung eines Stapels oder Stapelteiles gemeldet, wobei dann die Verfilmung des Stapels bzw. Stapelteiles wiederholt werden muß. Wegen der großen Verfilmungsgeschwindigkeit ist dies aber bei der Seltenheit der vorkommenden Störungen im Vergleich zur gesamten möglichen Verfilmungsmenge tragbar; dies umsomehr, als ein Benutzer im Einzelfall entscheiden kann, ob er eine erneute Verfilmung tatsächlich durchführen muß oder dies wünscht.

Weitere vorteilhafte Ausgestaltungen finden sich in den Unteransprüchen.

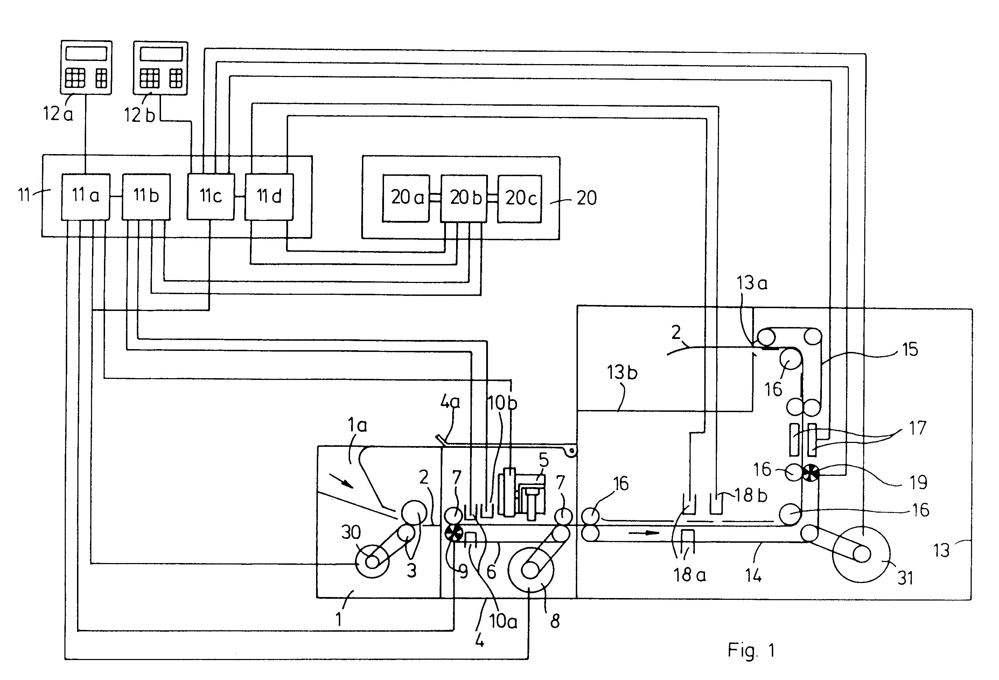

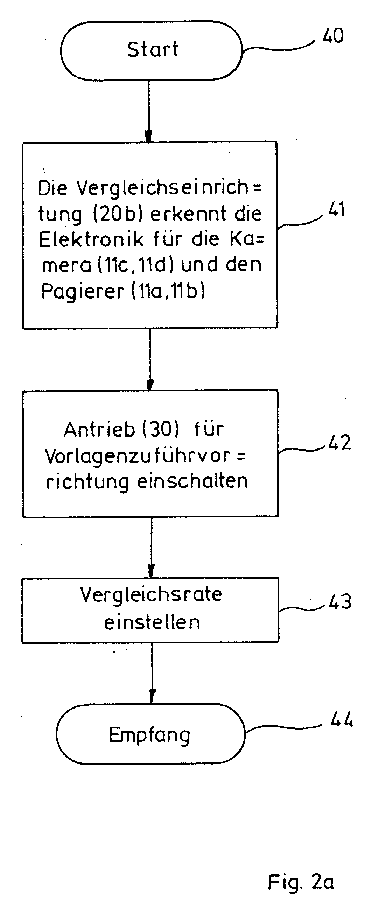

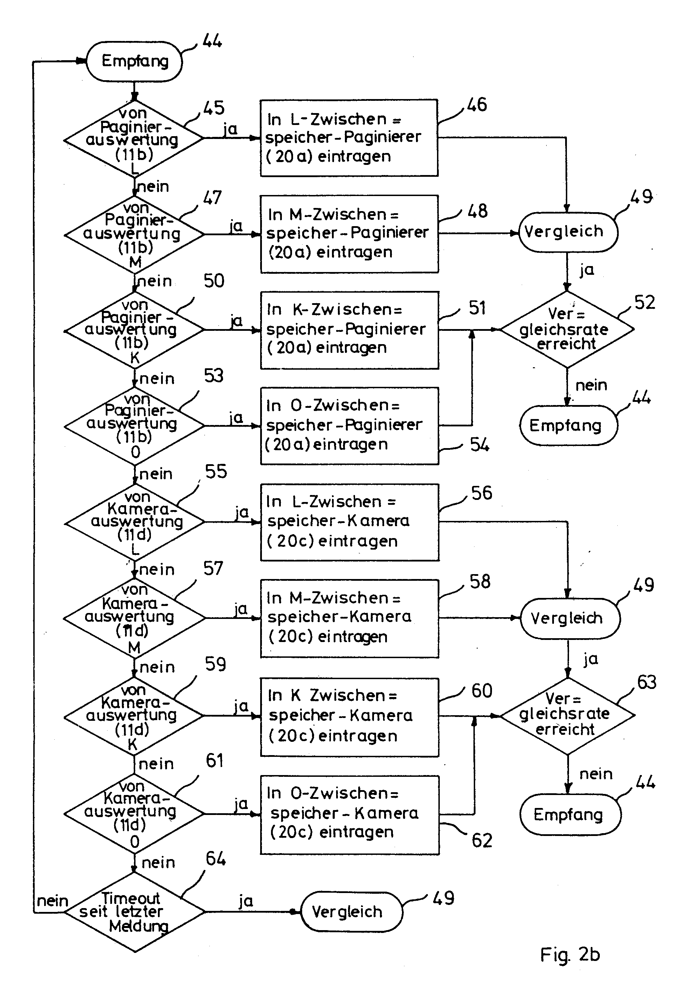

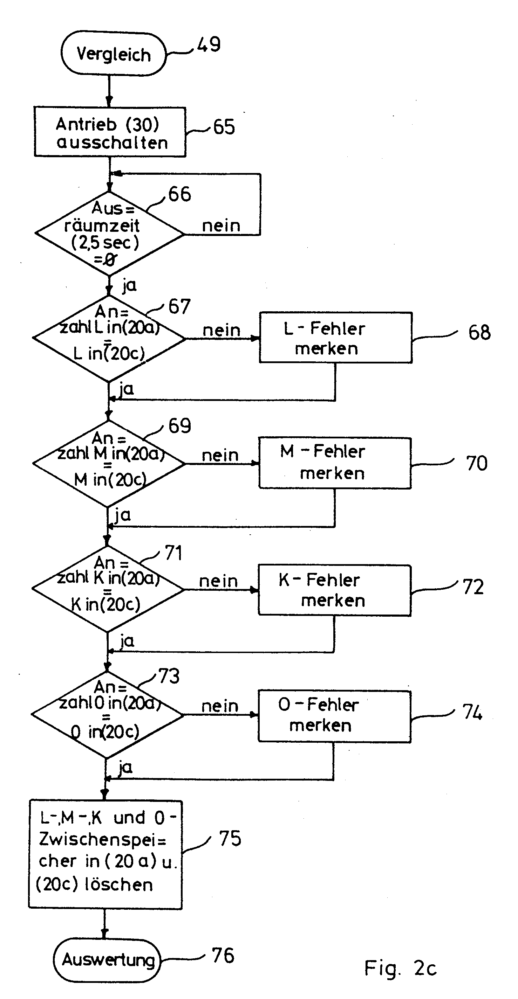

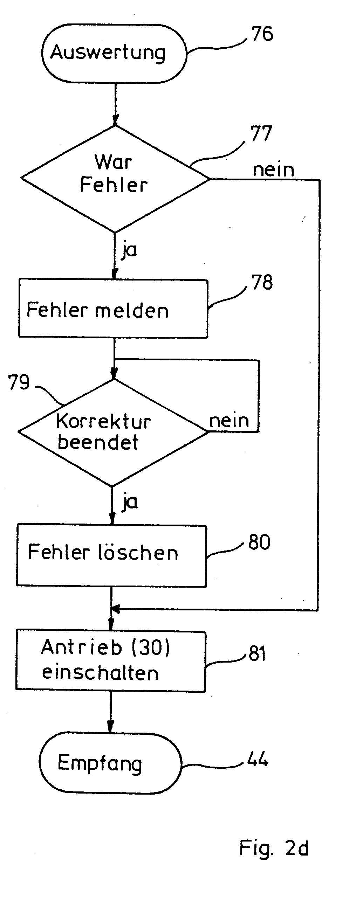

Im folgenden wird die Erfindung anhand eines in den Figuren 1 und 2 dargestellten Ausführungsbeispieles beschrieben. Es zeigen:

Figur 1        eine schematische Darstellung einer Mikrofilmkamera und

Fig. 2a bis 2d    ein Flußdiagramm zur Veranschaulichung der Wirkungsweise der Mikrofilmaufnahmekamera nach Figur 1.

Eine Mikrofilmkamera gemäß Figur 1 weist, von außen betrachtet, drei mechanische Gerätebaugruppen 1, 4 und 13 auf, deren Geräteteile elektrisch angetrieben und elektronisch gesteuert werden.

Die einem Benutzer zunächstliegende Vorlagenzuführvorrichtung 1 dient dem Einzug von mikrozuverfilmenden Vorlagen 2 und weist einen Eingabeschacht 1a für die Vorlagen 2 und wenigstens ein Transportrollenpaar 3 auf. An die Stelle des Eingabeschachtes könnte auch eine Stapelvorrichtung treten, durch die die Vorlagen automatisch eingezogen werden. Das Transportrollenpaar 3 ist bei Einschaltung des Gerätes mittels eines nicht gezeigten Hauptschalters durch einen Antrieb 30 antreibbar. Der Antrieb 30 ist mit einer elektronischen Steuervorrichtung 11, die nachfolgend näher beschrieben wird, verbunden und von hier aus ein- und ausschaltbar. Von der Vorlagenzuführvorrichtung 1 wird eine eingegebene Vorlage 2 zur zweiten Baugruppe beim Paginierer 4 transportiert, der bei Mikrofilmkameras für hohe Durchlaufgeschwindigkeiten ein Tintenspritzwerk 5 aufweisen kann. Aber grundsätzlich sind auch andere bekannte, elektronisch steuerbare Druckwerke 5 verwendbar. Für Reparaturzwecke ist der Paginierer durch einen Deckel 4a zugänglich. In dem Paginierer 4 werden die zunächst horizontal durchlaufenden Vorlagen 2 mittels des Druckwerkes 5 gekennzeichnet, beispielsweise automatisch nacheinander mit Ziffernfolgen bedruckt. Für den Transport der Vorlagen 2 durch den Paginierer 4 sind ein endloses Schleppband 6 und diesem gegenüberliegend Transportrollen 7 vorgesehen, wobei die Vorlagen auf dem Schleppband 6 aufliegen. Der Antrieb 8 für das Schleppband 6 ist wiederum mit der Steuervorrichtung 11 verbunden. Außerdem ist eine Kontrollvorrichtung 9 für die Bewegungsgeschwindigkeit der Vorlagen durch den Paginierer 4 mit der Steuervorrichtung 11 verbunden.

Von dem Paginierer 4, 5 werden die Vorlagen 2 nach der Kennzeichnung in die dritte Gerätebaugruppe 13 durch Führungsspalte zwischen den Gerätebaugruppe transportiert. Diese Gerätebaugruppe 13, der Aufnahmeteil, enthält die eigentliche, nicht näher dargestellte Mikrofilm-Aufnahmekamera mit Objektiv und Film und Filmantrieb. Hiervon ist lediglich die Belichtungsstation 17 für die Vorlagen 2 schematisch angedeutet, weil es für die vorliegende Erfindung nicht auf die spezielle Kameraausgestaltung ankommt. Die Belichtungsstation 17 enthält auch eine Aufbelichtungseinrichtung für Blips. Auch hier dienen Schleppbänder 14, 15 mit Andruckrollen 16 und ggf. dazwischen angeordneten Leitflächen dem Transport der Vorlagen 2. Der Antrieb 31 für das Schleppband 14 ist ebenfalls mit der Steuervorrichtung 11 verbunden. Dabei ist das Schleppband 14 vor der Belichtungsstation 17 um 90° nach oben umgelenkt. Vor der Belichtungsstation 17 ist eine weitere Kontrolleinrichtung 19 für die Geschwindigkeit einer fortlaufenden Vorlage 2 angeordnet und mit der Steuereinrichtung 11 verbunden. Die beiden Kontrolleinrichtungen 9 und 19 dienen zusammen der Synchronisierung der Transportgeschwindigkeit im Paginierer 4 und im Aufnahmeteil 13. Auch das Transportband 15 ist um 90° umgelenkt, so daß eine abgelichtete Vorlage 2 schließlich um 180° gewendet aus einem Ausgabespalt 13a des Aufnahmeteiles 13 ausgegeben und auf einem Auffangpult 13b gesammelt werden kann. Auch der Aufnahmeteil 13 kann mehrere Deckel oder abnehmbare Wandteile aufweisen, durch welche Kamera- und Transport- oder Überwachungsteile zu Bedienungs- oder Reparaturzwecken zugänglich sind. Die Kamera ist beim vorliegenden Beispiel so ausgebildet, daß eine Vorlage 2 durch die Belichtungsstation 17 weitertransportiert wird. Es wäre aber auch möglich, das Original jeweils in seiner ganzen Größe in die Belichtungsstation 17 einzuführen und dort zur Ablichtung kurz anzuhalten.

Nun ist es bereits üblich, Vorlagen unterschiedlicher Aufgabenbereiche zu Stapelteilen zusammenzufassen, wobei mehrere unterschiedliche Stapelteile zu einem Vorlagenstapel geschichtet werden können. Die den unterschiedlichen Aufgabenbereichen zuzuordnenden Stapelteile bekommen vom Drucker 5 unterschiedliche Hauptkodeziffern zugeordnet, denen dann beispielsweise die fortlaufende Numerierung durch den Drucker 5 untergeordnet wird. So könnten beispielsweise Personalsachen betreffende Stapelteile die Hauptkodeziffer 1 oder das Rechnungswesen betreffende Vorlagenstapelteile die Hauptkodeziffer 5, Teilgebiete dieser Bereiche eine bestimmte zweite Nebenkodeziffer, z.B. 1.3 oder 5.2 erhalten. Sind dann beispielsweise bei einem Stapelteil, welcher die Haupt- und Nebenkodeziffer 5.2 erhalten soll, schon 3540 Vorlagen verfilmt, so könnte ein weiterer zu verfilmender Stapelteil die Haupt- und Nebenkodeziffer 5.2 und fortlaufend die Nummern 523541 ff. aufgedruckt erhalten. Die Haupt- und Nebenkodes können vor Beginn des Stapelteiles von Hand eingegeben werden. Es ist aber auch üblich, vor einen Stapelteil eine Steuerkarte zu legen, die einen entsprechenden Barcode aufweist und die vom Paginierer 4 automatisch abgetastet wird und durch die der Haupt- und/oder Nebenkode automatisch am Drucker eingestellt wird. Die Ausgangszahl für die fortlaufende Vorlagennumerierung kann jeweils von Hand auf einer Tastatur 12a eingegeben werden. Haupt- und/oder Nebenkodes werden im folgenden als Nummernbereiche bezeichnet.

Außerdem ist es üblich, den einzelnen Mikrobildern bei der Ablichtung einer Vorlage 2 einen Blip aufzubelichten. Die den fortlaufenden Bildnummern entsprechenden Blips sind untereinander gleich. Wenn jedoch ein neuer Nummernbereich beginnt, dann wird dies auf dem Film durch einen anderen Bliptyp (z.B. länger) gekennzeichnet. Ein einem anderen Bliptyp von Hand oder mit Steuerkarte zugeordneter Aufnahmebereich wird nachfolgend als Blipbereich bezeichnet. Es ist daher notwendig, den Beginn eines anderen Stapelteiles entweder von Hand mittels einer Tastatur 12a für den Paginierer 4 und einer Tastatur 12b für die Aufbelichtungseinrichtung von Hand einzugeben oder eine entsprechende Steuerkarte sowohl im Paginierer 4 vor dem Drucker 5 als auch am Aufnahmeteil 13 vor der Belichtungsstation 17 abzutasten. Außerdem kann es vorkommen, daß man Vorlagenstapel ohne Zuordnung zu speziellen Aufgabenbereichen verfilmen und nur fortlaufend numerieren will. Auch hierzu ist eine Kontrolle der einzelnen Vorlagen für die fortlaufende automatische Erstellung der Ziffernfolge im Paginierer 4, 5 erforderlich.

Zur Abtastung der Vorlagen 2 ist daher dem Drucker 5 und der Belichtungsstation 17 je eine Abtasteinrichtung 10a bzw. 18a, z.B. eine Lichtschranke, zur Erkennung der einzelnen Vorlagen an sich und eine Abtasteinrichtung 10b bzw. 18b, z.B. ein Barcodeleser für das Lesen der Barcodes auf den Steuerkarten vorgeschaltet. Die Lichtschranken 10a und 18a einerseits und die Barcodeleser 10b und 18b andererseits sind untereinander gleich. Mit einer derartigen Anordnung ist es also möglich, die Nummernbereiche am Drucker 5 einerseits und die Blipbereiche auf dem Film andererseits einander entsprechend den unterschiedlichen Stapelteilen zuzuordnen. Diese Anordnung an sich erlaubt es aber nicht, den ordnungsgemäßen Durchlauf von den Paginierer 4 passierenden Vorlagen oder Steuerkarten durch den Aufnahmeteil 13 bzw. deren richtige Erfassung zur Steuerung der Blip-Aufbelichtung in Zuordnung zum Paginierer zu kontrollieren und dann z.B. bei Störungen (Aufdruck eines neuen Nummernbereichs ohne Aufbelichtung eines neuen Blipbereichs oder Hängenbleiben einer Vorlage oder Ausfall eines Antriebs z.B. durch zu großen Schlupf eines Schleppbandes) das ganze Gerät abzuschalten oder wenigstens ein Alarmsignal (optisches oder akustisches Signal) auszulösen. Es könnte daher zu miteinander nicht übereinstimmenden Nummern- und Blipbereichen auf Vorlagen und Mikrofilm oder zu Vorlagenstaus im Gerät und sogar zur Zerstörung von Vorlagen vor ihrer Verfilmung kommen. Dieser Nachteil soll nun mit der vorliegenden Erfindung auf die nachfolgend näher beschriebene Weise vermieden werden. Eine Schwierigkeit bestand dabei darin, daß ein und dieselbe Vorlage oder Steuerkarte die Abtasteinrichtung 10a, 10b bzw. 18a, 18b mit einer zeitlichen Distanz passiert. Es mußte daher sichergestellt werden, daß beide Abtasteinrichtungen dieselbe Vorlage und nicht zwei verschiedene Vorlagen miteinander vergleichen und auswerten.

Um bei einer Anordnung gemäß dem Ausführungsbeispiel nach der gezeigten Figur 1 bei jeder einzelnen der schnell durchlaufenden Vorlagen 2 oder Steuerkarten deren zeitlich verschiedenen Durchlauf durch die beiden Abtasteinrichtungen 10a, 10b bzw. 18a, 18b ohne Verwechslung mit einer der vorauslaufenden oder nachkommenden Vorlagen zu erreichen, ist die Steuervorrichtung 11 in besonderer Weise ausgebildet und dieser ein besonders ausgebildeter Komparator 20 zugeschaltet. So weist die Steuervorrichtung 11 eine Paginiersteuereinheit 11a, eine Paginierauswertschaltung 11b, eine Kamerasteuereinheit 11c und eine Kameraauswertschaltung 11d auf. Der Komparator 20 weist eine Vergleichseinrichtung 20b auf, die mit einem Zwischenspeicher 20a für den Paginierer und einem Zwischenspeicher 20c für die Kamera verbunden ist. Die Vergleichseinrichtung 20b ist mit der Paginierauswertschaltung 11b und der Kameraauswertschaltung 11d verbunden und speichert die von dort erhaltenen Werte der Reihe nach in den jeweiligen Zwischenspeicher 20a bzw. 20c ein, um sie von dort aus nach Durchlauf eines Vorlagenstapels oder einer vorgebbaren, bestimmten Zahl von Vorlagen wieder abzurufen und auf das Vorhandensein jeweils gleicher Werte vom Paginierer und von der Kamera zu vergleichen. Mit der Paginierersteuereinheit 11d sind der Schleppbandantrieb 8 des Paginierers 4, der Drucker 5 und die Geschwindigkeitskontrollvorrichtung 9 und die Paginiertastatur 12a verbunden. Mit der Kamerasteuereinheit 11c sind die Transportmittel im Aufnahmeteil 13, die eigentliche Kamera samt Filmtransport, die Geschwindigkeitskontrollvorrichtung 19 und die Kameratastatur 12b verbunden. Die Tastaturen 12a, 12b können dabei zugleich Leuchtanzeigen für die Paginier- bzw. Kamerafunktion aufweisen. Die Paginierauswertschaltung 11b und die Kameraauswertschaltung 11d sind mit der Paginierabtasteinrichtung, nämlich der Lichtschranke 10a und dem Barcodeleser 10b, bzw. der Kameraabtasteinrichtung, nämlich der Lichtschranke 18a und dem Barcodeleser 18b verbunden. Außerdem sind jeweils die Paginierersteuereinheit 11a und die Paginiererauswertschaltung 11b einerseits und die Kamerasteuereinheit 11c und die Kameraauswertschaltung 11d andererseits sowie die beiden Steuereinheiten 11a und 11c miteinander verbundden.

Die Funktionsweise der Ausgestaltung nach der Figur ist nun folgende:

Wie bereits erläutet, gibt es für die verschiedenen Nummernbereiche des Paginierers 4, 5 bzw. die zugeordneten Blipbereiche der Kamera 17 je eine Steuerkarte mit festgelegtem und den Auswertschaltungen 11b, 11d bekanntem Barcode. Üblich sind derzeit zwei Steuerkarten, die einem langen und einem mittellangen Blip auf dem Film entsprechen, wobei die Hauptkodeziffer bzw. die Nebenkodeziffer je entsprechender Steuerkarte am Drucker um die Ziffer 1 erhöht wird. Gelangt nun eine einem Stapelteil vorangelegte Steuerkarte zur ersten Paginiererabtasteinrichtung 10a, so meldet diese den Durchgang einer Vorlage an die Paginiererauswertschaltung 11b, ohne das Vorhandensein einer Steuerkarte zu erkennen. Erst der Paginiererbarcodeleser 10b liest den Barcode auf der Steuerkarte und meldet seinen Inhalt ebenfalls an die Paginiererauswertschaltung 11b. Von dieser wird die Meldung in Form eines Signals, nämlich des entsprechenden sog. ASCII-Zeichens, weitergeleitet an die Steuereinheit 11a, welche ein Anhalten des Transportes der Steuerkarte im Paginierer 4 bis zum Durchlauf und der Ausgabe der letzten vor der Steuerkarte eingegebenen Vorlage aus dem Aufnahmeteil 13 bewirkt. Dann wird die Steuerkarte in den Aufnahmeteil 13 transportiert, wobei die erste Kameraabtasteinrichtung 18a wiederum den Durchlauf einer Vorlage ohne Erkennung der Steuerkarte und der Kamerabarcodeleser 18b den Durchlauf der Steuerkarte erkennt und den Barcode auf der Steuerkarte liest. Die Kameraabtasteinrichtungen 18a, 18b melden ihre Abtastsignale, nämlich die entsprechenden ASCII-Zeichen, an die Kameraauswertschaltung 11d. Somit sind bei ordnungsgemäßen Durchlauf der Steuerkarte in beiden Auswertschaltungen 11b und 11d die gleichen Signale (ASCII-Zeichen) eingegangen. Diese werden in ihrer zeitlichen Folge weitergeleitet an die Vergleichseinrichtung 20b des Komparators 20 und von dort zeitlich nacheinander in den zugehörigen Zwischenspeicher 20a bzw. 20c. Nach Vorhandensein der eingespeicherten, völlig gleichen Signale (ASCII-Zeichen) in beiden Zwischenspeichern 20a, 20c, also nach einer vorgebbaren Wartezeit, werden sie von der Vergleichseinrichtung 20b wieder aufgerufen und miteinander verglichen. Entsprechen die eingespeicherten ASCII-Zeichen einander, so wird dies von der Vergleichseinrichtung 20b in die Steuereinheiten 11a und 11c gemeldet, so daß sämtliche Paginierer- und Kamerafunktionen für die Belichtung der Vorlagen des jeweiligen Stapelteiles weiterlaufen.

Die Steuervorrichtung 11 mit ihren Schaltungsteilen 11a bis 11d und der Komparator 20 haben aber auch während des Restdurchlaufs der einer Steuerkarte vorausgehenden Vorlagen, die einer anderen, früher durchgelaufenen Steuerkarte gefolgt waren, verglichen, ob gleiche ASCII-Zeichen vom Paginierer beim Paginiererzwischenspeicher 20a und von der Kamera beim Kamerazwischenspeicher 20c eingegangen sind. Fehlen jeweils nach einer vorgegebenen Zahl von verfilmten Vorlagen (z.B. nach zehn oder fünfundzwanzig Vorlagen) die einander entsprechenden ASCII-Zeichen in den beiden Zwischenspeichern 20a, 20c, so daß in einem Zwischenspeicher ein oder mehrere Signale zu wenig zum Abruf und Vergleich in der Vergleichseinrichtung 20b zur Verfügung stehen, so meldet die Vergleichseinrichtung 20b dieses Fehlen an die Paginierer- und die Kamerasteuereinheit 11a und 11c. Diese bewirken nun je nach Ausgestaltung das Aufleuchten von Alarm-Lichtsignalen an den Tastaturen 12a, 12b oder lösen akustische Signale aus oder schalten gleich direkt die Paginierer- und Kameraantriebsmittel ab, so daß den Nummernbereichen nicht entsprechende Blipbereiche im Aufnahmeteil 13 und im Paginierer 4 bei der weiteren Verfilmung entweder durch Abschalten des Gerätes von Hand oder durch automatische Abschaltung des Gerätes vermieden werden. Der gleiche Vorgang einer Alarmauslösung bzw. der automatischen Abschaltung des Gerätes würde sich auch ereignen, wenn eine neu eingegebene Steuerkarte z.B. nur durch den Paginiererbarcodeleser 10b lesbar wäre und der Kamerabarcodeleser 18b aus irgendeinem Grunde den Barcode der Steuerkarte nicht lesen könnte oder umgekehrt, so daß dann der Steuerkarte nachfolgende Vorlagen nicht zusammenpassende Nummern- und Blipbereiche erhalten würden.

Es ist nun, wie schon erwähnt, möglich, das Gerät alternativ unter Verwendung von Steuerkarten oder ohne Steuerkarten unter Bedienung der Tastaturen 12a, 12b oder überhaupt ohne die Barcodeleser 10b und 18b unter ausschließlicher Bedienung der Tastaturen 12a, 12b zu verwenden. Soll dabei bei der Verfilmung von Stapelteilen mit einem neuen Nummern- und Blipbereich begonnen werden, so müssen die Eingaben immer auf beiden Tastaturen 12a und 12b in miteinander korrespondierender Weise erfolgen. Wird beispielsweise auf der Paginierertastatur 12a ein neuer Nummernbereich eröffnet, während auf der Kameratastatur 12b kein entsprechender Blipbereich eingeleitet wird, so sind die ASCII-Zeichen, die über die Steuereinheiten 11a bzw. 11c bei Eingang des Signals von den Abtasteinrichtungen 10a und 18a an den Auswertschaltungen 11b bzw. 11d eingehen und in die zugeordneten Zwischenspeicher 20a bzw. 20c eingespeichert werden, unterschiedlich. Folglich werden beim Abruf der unterschiedlichen Signale (ASCII-Zeichen) in den Zwischenspeichern 20a und 20c durch die Vergleichseinrichtung 20b keine Übereinstimmung festgestellt und ein Alarm und/oder die Abschaltung des Gerätes ausgelöst. Die Alarmauslösung bzw. die automatische Abschaltung des Gerätes können erst nach Behebung der Schadensursache wieder rückgängig gemacht werden, so daß erst dann die Verfilmung fortgesetzt werden kann.

Es ist erkennbar, daß die beschriebene Kontrollvorrichtung für den ordnungsgemäßen Durchlauf der Vorlagen 2 und/oder vorgeschalteter Steuerkarten bzw. für eine ordnungsgemäße Zuordnung von Nummern- und Blipbereichen auf Vorlagen 2 und Mikrofilm durch eine Mikrofilmkamera mit Paginierer in vielfältiger Weise anwendbar ist, nämlich bei völlig automatischem Antrieb, bei teilweiser oder ausschließlicher Steuerung von Paginierer und Kamera über Tastaturen, bei automatischer Zuführung der Vorlagen von Vorlagenstapeln oder Stapelteilen oder auch bei Zuführung der Vorlagen von Hand. Im letzteren Fall erfolgt lediglich die Zuführung der Vorlagen und/oder Steuerkarten wesentlich langsamer. Allen diesen Betriebsarten aber ist gemeinsam, daß eine bestimmte Vorlage an der Paginiererabtasteinrichtung 10a und/oder 10b und der Kameraabtasteinrichtung 18a und/oder 18b das gleiche ASCII-Zeichen auslöst und beide ASCII-Zeichen über die zugeordneten Auswertschaltungen 11b bzw. 11d in die zugeordneten Zwischenspeicher 20a bzw. 20c eingespeichert werden. Der Vergleich erfolgt in der Vergleichsschaltung 20b jeweils nach Durchlauf einer Steuerkarte oder nach Durchlauf eines Vorlagenstapels oder nach Durchlauf eines Stapelteils von einer vorgegebenen Zahl von Vorlagen, wobei die Vorlagenzufuhr zum Paginierer kurzzeitig abgeschaltet wird und eine konstante Zeitspanne (ca. 2,5 sec.) abgewartet wird, bis die Steuerkarte oder die letzte Vorlage des Stapels oder des Stapelteils die Belichtungsstation passiert hat. Sind jeweils beide, gleiche ASCII-Zeichen von einer Steuerkarte bzw. von gleichen Zahlen von Vorlagen innerhalb eines vorgegebenen begrenzten Stapelteils (z.B. von acht oder zehn oder zwanzig Vorlagen) vorhanden, so geht der Betrieb des Gerätes weiter. Werden von der Vergleichseinrichtung 20b jedoch ungleiche ASCII-Zeichen (beispeilsweise auch ungleiche Signalzahlen) in den beiden Zwischenspeichern 20a und 20c analysiert, so erfolgt die Auslösung einer Warnung für den Benutzer und/oder die automatische Geräteabschaltung bis zur Behebung des Schadens oder einer anderen Ursache der Diskrepanz, die z.B. in einer nicht korrespondierenden Betätigung der beiden Tastaturen 12a und 12b liegen kann. Die Vorlagenstapelteile, die schon durchgelaufen sind und die Fehlermeldung veranlaßt haben, können nochmals in das Gerät eingegeben und verfilmt werden.

In der Praxis ist es zweckmäßig, je ASCII-Zeichenart L bzw. M bzw. K (oder auch 0 für beabsichtigte fehlende Blips) in der jeweiligen Auswertschaltung 11b bzw. 11d bzw. in dem jeweiligen Zwischenspeicher 20a, 20c einen eigenen Zähler vorzusehen, so daß insgesamt sechs (oder auch acht) Zähler vorhanden sind.

Von besonderer Bedeutung ist, daß im Komparator 20 kein Vergleich der am Paginierer 5 auf die Vorlagen 2 aufgedruckten Ziffernkombinationen mit den Ziffernkombinationen erfolgt, die einer Blipfolge auf einem einer Vorlage entsprechenden Mikrobild zugeordnet sind. Hierdurch ist es möglich, am Paginierer und an der Blip-Aufbelichtungseinrichtung mit unterschiedlichen Zahlen und Zahlenkombinationen zu arbeiten. Dies kann für eine vom Anwender gewünschte, besondere, sachbezogene Sortierung von Vorteil sein. Durch den stapelweisen Vergleich von vom Paginierer und von der Blipaufbelichtungseinrichtung gemeldeten ASCII-Zeichen (anstelle von den bekannten, vorlagenweise verglichenen Ziffernkombinationen) wird außerdem die Verfilmungsgeschwindigkeit ganz beträchtlich erhöht.

Im folgenden wird anhand des Flußdiagramms der Figuren 2a bis 2d der Funktionsablauf detailliert beschrieben.

Gemäß Figur 2a wird bei Schritt 40 die Mikrofilmaufnahmekamera gestartet. In Schritt 41 vergleicht die Vergleichseinrichtung 20b die Elektronik für die Kamera, nämlich die Kamera-Steuereinheit und die Kamera-Auswerteschaltung mit der Paginier-Steuereinheit und der Paginier-Auswerteschaltung 11a, 11b. Ist dieser Vergleich erfolgreich, so wird in Schritt 42 der Antrieb 30 für die Vorlagenzuführvorrichtung 1 eingeschaltet. In Schritt 43 wird die Vergleichsrate eingestellt, d.h. die Zahl der einen Stapelteil bildenden Belege, nach der jeweils der Vergleich durchgeführt werden soll. Nach Durchführung der Schritte 40 bis 43 wird in Schritt 44 die Empfangs-Routine gestartet.

Wie bereits in Verbindung mit Figur 1 erwähnt, gibt es vier Arten von ASCII-Zeichen, nämlich L-, M-, K- und O-Zeichen, wobei diese ASCII-Zeichen sowohl in vier entsprechenden Zählern des Paginier-Zwischenspeichers 20a als auch in vier entsprechenden Zählern des Kamera-Zwischenspeichers 20c gezählt werden. Die L-Zeichen und die M-Zeichen werden im Paginierwerk durch entsprechende Steuerkarten, die den Vorlagen vorangeschickt werden, erzeugt. Das K-Zeichen wird nach einer Ausführungsform ebenfalls durch eine Steuerkarte initiiert, wobei dann weitere K-Zeichen durch die Vorlage selbst erzeugt werden. Gemäß Figur 2b besteht in Fortführung von Figur 2a bei Schritt 44 Empfangsbereitschaft. Bei Schritt 45 wird geprüft, ob ein L-Zeichen vorhanden ist. Ist dies der Fall, so wird in Schritt 46 das L-Zeichen in ASCII-kodierter Form in dem Zwischenspeicher des Paginierers 20a gespeichert.

Wird kein L-Zeichen erkannt, so wird in Schritt 47 geprüft ob in der Paginier-Auswerteschaltung 11b ein M-Zeichen vorhanden ist. Ist dies der Fall, so wird dieses in Scritt 48 in den zugeordneten Zwischenspeicher des Paginierers 20a eingetragen.

Bei der bei Schritt 44 eingeleiteten Empfangsroutine wird im Anschluß an die Schritte 46 und 48 in Schritt 49 eine Vergleichsroutine gestartet.

Wird bei Schritt 47 kein M-Zeichen festgestellt, so wird bei Schritt 50 geprüft, ob von der Paginier-Auswerteschaltung 11b ein K-Zeichen erhalten wurde. Ist dies der Fall, so wird in Schritt 51 im zugeordneten Zwischenspeicher 20a des Paginierers das K-Zeichen gespeichert. Nachfolgend wird bei Schritt 52 in der Vergleichseinrichtung 20b geprüft, ob die voreingestellte Vergleichsrate erreicht ist oder nicht. Ist dies der Fall, so wird die Vergleichsroutine bei Schritt 49 initiiert, während im anderen Falle auf Schritt 44 zurückgeschaltet wird.

Wird bei Schritt 50 kein K-Zeichen festgestellt, so wird bei Schritt 53 geprüft, ob von der Paginier-Auswerteschaltung 11b ein O-Zeichen festgestellt worden ist oder nicht. Wird ein O-Zeichen festgestellt, so wird dieses bei Schritt 54 im zugeordneten Zwischenspeicher 20a des Paginierers gespeichert.

Wird kein O-Zeichen festgestellt, so wird im nachfolgenden Schritt 55 geprüft, ob ein L-Zeichen von der Kamera-Auswerteschaltung 11d erhalten wurde oder nicht. Ist dies der Fall, so wird dieses L-Zeichen bei Schritt 56 im zugeordneten L-Zwischenspeicher 20c der Kamera eingespeichert.

Wird kein L-Zeichen detektiert, so wird im Schritt 57 geprüft, ob von der Kamera-Auswerteschaltung 11d ein M-Zeichen erhalten wurde oder nicht. Wurde ein M-Zeichen festgestellt, so wird dieses bei Schritt 58 im M-Zwischenspeicher 20c der Kamera gespeichert. Im Anschluß an die Schritte 56 und 58 wird die mit 49 bezeichnete Vergleichsroutine (Figur 2c) gestartet.

Wird kein M-Zeichen bei Schritt 57 festgestellt, so wird im Folgeschritt 59 geprüft, ob ein K-Zeichen von der Kamera-Auswerteschaltung 11d erhalten wurde oder nicht. Ist dies der Fall, so wird bei Schritt 60 dieses in den K-Zwischenspeicher 20c der Kamera eingespeichert.

Ist kein K-Zeichen festgestellt worden, so wird bei Schritt 61 geprüft, ob ein O-Zeichen von der Kamera-Auswerteschaltung 11d erhalten wurde oder nicht. Ist dies der Fall, so wird dieses bei Schritt 62 im O-Zwischenspeicher 20c der Kamera eingespeichert. Im Anschluß an die Schritte 60 und 62 wird bei Schritt 63 geprüft, ob die voreingestellte Vergleichsrate erreicht wurde oder nicht. Ist dies der Fall, so wird auf die Vergleichsroutine 49 übergegangen, während im anderen Falle auf Schritt 44 zurückgeschaltet wird.

Wird kein O-Zeichen bei Schritt 61 festgestellt, so wird bei Schritt 64 geprüft, ob seit der letzten Meldung eines Zeichens eine vorbestimmte Zeitspanne (time out) verstrichen ist oder nicht. Ist diese Zeit verstrichen, so wird auf die Vergleichsroutine 49 geschaltet, während im anderen Falle auf den Empfangsschritt 44 zurückgeschaltet wird.

Die einzelnen Prüfschritte erfolgen im Takt eines nicht dargestellten Takt-Oszillators.

Gemäß Figur 2c läuft die Vergleichsroutine wie folgt ab. Wie bereits in Verbindung mit Figur 2b festgestellt, wird die Vergleichsroutine bei Schritt 49 gestartet. Nachfolgend wird in Schritt 65 der Antrieb 30 der Eingabeeinrichtung 1 ausgeschaltet. Im nachfolgenden Schritt 66 wird festgestellt, ob eine vorgegebene Räumzeit von z.B. 2,5 sec. erreicht ist oder nicht. Ist sie nicht erreicht, wird der Prüfschritt 66 im Takt des Takt-Oszillators wiederholt. Dann, wenn die Ausräumzeit erreicht ist, wird durch die Vergleichseinrichtung 20b in Schritt 67 geprüft, ob die Zahl der L-Zeichen im L-Zwischenspeicher 20a des Paginierers gleich der Zahl der L-Zeichen im L-Zwischenspeicher der Kamera ist oder nicht. Wird Ungleichheit festgestellt, so wird dies als L-Fehler in Schritt 68 gewertet. Wird Gleichheit festgestellt, so wird im Folgeschritt 69 geprüft, ob die Anzahl der M-Zeichen im M-Zwischenspeicher 20a des Paginierers gleich der Anzahl der M-Zeichen im M-Zwischenspeicher 20c der Kamera ist. Ist dies nicht der Fall, so wird bei Schritt 70 dieses als M-Fehler registriert. Wird Gleichheit festgestellt, so wird anschließend bei Schritt 71 geprüft, ob die Anzahl der K-Zeichen im K-Zwischenspeicher 20a des Paginierers gleich der Anzahl der K-Zeichen im K-Zwischenspeicher 20c der Kamera ist. Besteht keine Gleichheit, so wird dieses in Schritt 72 als K-Fehler registriert. Besteht Gleichheit, so wird anschließend bei Schritt 73 festgestellt, ob die Anzahl der O-Zeichen im Null-Zwischenspeicher 20a des Paginierers gleich der Anzahl der O-Zeichen im Null-Zwischenspeicher 20c der Kamera ist. Ist keine Gleichheit vorhanden, so wird dies in Schritt 74 als O-Fehler registriert. Besteht Gleichheit, so wird im Folgeschritt 75 veranlaßt, daß der L-, M-, K- und O-Zwischenspeicher 20a des Paginierers und der L-, M-, K- und O-Zwischenspeicher 20c der Kamera gelöscht werden. Im Folgeschritt 76 wird die Auswerteroutine gestartet.

Gemäß Figur 2d folgt auf den Schritt 76 der Auswertungsroutine bei Schritt 77 die Prüfung, ob ein Fehler vorhanden war oder nicht. Wurde ein Fehler festgestellt, so wird bei Schritt 78 dieser Fehler gemeldet.

Im Folgeschritt 79 wird geprüft, ob eine Fehlerkorrektur beendet wurde oder nicht. Ist die Fehlerkorrektur erfolgreich beendet worden, so wird im Schritt 80 der Fehler gelöscht.

Nach dem Löschen des Fehlers bei Schritt 80 wird bei Schritt 81 der Antrieb 30 wieder eingeschaltet. Eine Einschaltung des Antriebes 30 erfolgt auch, wenn bei Schritt 77 kein Fehler festgestellt worden ist. Im Anschluß an Schritt 81 wird wieder auf Schritt 44 (Figur 2b) zurückgeschaltet.

Das bedeutet, daß bei jedem Vergleichsvorgang der Vergleichsroutine sämtliche Zwischenspeicher für die L-Zeichen, M-Zeichen, K-Zeichen und O-Zeichen hinsichtlich ihrer Zählinhalte miteinander verglichen werden unabhängig davon, ob ein L-, M- oder K-Zeichen vorliegt oder nicht. Bei nichtvorhandenem L-, M- oder K-Zeichen muß bei einwandfreiem Betrieb das O-Zeichen erkannt werden. Auf diese Weise wird es möglich, das Vorhandensein oder Nichtvorhandensein der Zeichen in den zugeordneten Zwischenspeicher festzustellen. Dadurch, daß sämtliche Zwischenspeicher beim Vergleich abgefragt werden, wird bei einem Vorlagenstapel jedweder Fehler nach Ablauf der vorerwähnten Räumzeit festgestellt.

**Patentansprüche**

1. Verfahren zur Überwachung der Verfilmung von Vorlagen (2) in einer einen Paginierer (4) und eine Belichtungsstation (17) aufweisenden Mikrofilmkamera, wobei die Vorlagen zunächst im Paginierer mit Nummernfolgen versehen werden und anschließend in der Belichtungsstation verfilmt werden, wobei auf dem Film für jedes Filmbild einer Vorlage ein Blip aufbelichtet wird und wobei in einer Vergleichseinrichtung auf Übereinstimmung der Vorlagen mit den zugeordneten Filmbildern der Vorlagen verglichen wird und bei Nichtübereinstimmung ein Fehlersignal erzeugt wird, <u>dadurch gekennzeichnet, daß</u>

   - im Paginierer (1) die Nummernfolgen in Abhängigkeit von der Art der Zusammenstellung der Vorlagen aus verschiedenen Nummernbereichen gewählt werden,

   - daß den Nummernbereichen in der Belichtungsstation (bei 17) jeweils ein vorgegebener Blip-Typ oder eine Blip-Typ-Kombination durch Aufbelichtung entsprechender Blips zugeordnet wird,

   - daß beim Durchlauf der Vorlagen jeder Nummernbereich bei jeder Betätigung des Paginierers (1) als Vorlagen-Signale (z.B. O, K, M, L) in eine Paginierer-Auswerteschaltung (11b) und jeder zugeordnete Blip-Typ oder jede Blip-Typ-Kombination bei der nachfolgenden Blip-Aufbelichtung als Blip-Signale (z.B. O, K, M, L) in eine Belichtungsstation-Auswerteschaltung (11d) in entsprechend kodierter Signalform (z.B. ASCII-Kode) eingegeben werden,

- daß die Vorlagen-Signale jedes Nummernbereichs und die zugeordneten Blip-Signale jeweils in einem ihnen zugeordneten Zwischenspeicher (20a, 20c) abgespeichert werden,

- daß der Vergleich auf Übereinstimmung in der Vergleichseinrichtung (20b) jeweils nach Speicherung einer vorgegebenen Anzahl (z.B. 25) der kodierten Vorlagen-Signale und Blip-Signale erfolgt, und

- daß bei Feststellung der Übereinstimmung die Zwischenspeicher (20a, 20c) zurückgesetzt werden.

2. Verfahren nach Anspruch 1, dadurch gekennzeichnet, daß zumindest einige der Nummernbereiche und der zugeordneten Blip-Typen oder Blip-Typ-Kombinationen durch den Vorlagen vorangeschickte Steuerkarten initiiert werden und daß der Vergleich auf Übereinstimmung nach Durchlauf einer Steuerkarte erfolgt.

3. Verfahren nach Anspruch 1 oder 2, dadurch gekennzeichnet, daß bei mehreren Nummernbereichen und zugeordneten Blip-Typen oder Blip-Typ-Kombinationen der Vergleich auf Übereinstimmung jeweils für sämtliche Vorlagen-Signale und Blip-Signale der Nummernbereiche und Blip-Typen erfolgt.

4. Verfahren nach einem der vorhergehenden Ansprüche, dadurch gekennzeichnet, daß nach Durchlauf der vorgegebenen Anzahl von Vorlagen (2) vor dem Vergleich der in beiden Zwischenspeichern (20a, 20c) gespeicherten Vorlagen-Signalen mit den kodierten Blip-Signalen die Vorlagenzufuhr in den Paginierer (4) unterbrochen wird.

5. Verfahren nach Anspruch 4, dadurch gekennzeichnet, daß bei Ungleichheit der in den beiden Zwischenspeichern (20a, 20c) gespeicherten Beleg-Signale und Blip-Signale die Vorlagenzufuhr unterbrochen bleibt, der Paginierer (4) und die Mikrofilmkamera abgeschaltet werden und/oder als Fehlersignal ein Alarmsignal ausgelöst wird.

6. Verfahren nach einem der vorhergehenden Ansprüche, dadurch gekennzeichnet, daß der Vergleich auf Übereinstimmung für eine Steuerkarte und/oder für die vorgegebene Anzahl der Vorlagen nach einer Wartezeit erfolgt, nach der die Steuerkarte oder der letzte Beleg die Belichtungsstation verlassen hat.

7. Mikrofilmkamera zur Durchführung des Verfahrens nach einem der vorhergehenden Ansprüche, mit einem Paginierer (4) zum Aufbringen von Nummernfolgen aus verschiedenen Nummernbereichen, mit einer Belichtungsstation (17) enthaltend eine Blip-Aufbelichtungseinrichtung zur Verfilmung der Vorlagen sowie zur Aufbelichtung von Blips für die Filmbilder der Vorlagen, mit einer Speichereinrichtung sowie mit einer Vergleichseinrichtung, dadurch gekennzeichnet, daß entsprechend den Nummernbereichen unterschiedliche Blip-Typen oder Blip-Typ-Kombinationen aufbelichtbar sind, daß der Paginierer (4) und die Blip-Aufbelichtungseinrichtung (bei 17) mit je einer Auswerteschaltung (11b, 11d) der Vergleichseinrichtung verbunden sind, der kodierte Vorlagen-Signale vom Paginierer (4) und kodierte Blip-Signale von der Blip-Aufbelichtungseinrichtung (bei 17) meldbar sind, daß jede Auswerteschaltung (11b, 11d) mit einem Zwischenspeicher (20a, 20c) der Vergleichseinrichtung (20) verbunden ist, daß in jedem der Zwischenspeicher (20a, 20c) die von der zugeordneten Auswerteschaltung (11b, 11c) zugeführten Vorlagen- und Blip-Signale speicherbar sind und daß die Zwischenspeicher (20a, 20c) mit einem Vergleicher (20b) der Vergleichseinrichtung verbunden sind, in dem nach Durchlauf einer vorgegebenen Anzahl von Vorlagen (2) die in beiden Zwischenspeichern (20a, 20c) gespeicherten Vorlagen-Signale und Blip-Signale auf Gleichheit überprüfbar sind.

8. Mikrofilmkamera nach Anspruch 7, dadurch gekennzeichnet, daß die unterschiedlichen Nummernbereiche und die diesen zugeordneten Blips durch Steuerkarten auslösbar sind, die jeweils einer vorgegebenen Anzahl von Vorlagen eines Vorlagenstapels oder eines Vorlagenstapelteiles vorgelegt sind, daß dem Paginierer (4) und der Blip-Aufbelichtungseinrichtung (bei 17) je eine sowohl einer Vorlagenerkennung an sich als auch eine Steuerkartenerkennung ermöglichende Abtasteinrichtung, z.B. ein Barkodeleser (10a, 10b bzw. 18a, 18b) zugeordnet sind, die über die jeweilige Auswerteschaltung (11b, 11d) mit je einem der Zwischenspeicher (20a, 20c) verbunden sind.

9. Mikrofilmkamera nach Anspruch 7, dadurch gekennzeichnet, daß unterschiedliche Nummernbereiche und die diesen zugeordneten Blips der Blip-Typen oder Blip-Typen-Kombination manuell über Tastaturen auslösbar sind, daß dem Paginierer (4) und der Blip-Aufbelichtungseinrichtung (bei 17) je eine, durchlaufende Vorlagen (2) erkennende Abtasteinrichtung (10a bzw. 18a) (z.B. Lichtschranke), zugeordnet ist, die je über eine der Auswerteschaltungen (11b, 11d) mit einem der Zwischenspeicher (20a, 20c) verbunden sind.

10. Mikrofilmkamera nach einem der Ansprüche 7 bis 9, dadurch gekennzeichnet, daß mit jeder der Auswerteschaltungen (11b, 11d) je eine Tastatur (12a bzw. 12b) zur manuellen Eingabe des Beginns eines Vorlagenstapels oder Vorlagenstapelteiles verbunden ist.

11. Mikrofilmkamera nach einem der Ansprüche 7 bis 10, dadurch gekennzeichnet, daß eine Steuervorrichtung (11, 11a, 11b) vorgesehen ist, durch die bei nicht übereinstimmenden Vorlagen-Signalen und zugeordneten Blip-Signalen (z.B. ASCII-Zeichen) in den beiden Zwischenspeichern (20a, 20c) akustische oder optische Alarmsignale auslösbar sind.

12. Mikrofilmkamera nach einem der Ansprüche 7 bis 10, dadurch gekennzeichnet, daß eine Steuervorrichtung (11, 11a, 11c) vorgesehen ist, durch die bei nicht übereinstimmenden Vorlagen-Signalen und zugeordneten Blip-Signalen (z.B. ASCII-Zeichen) in den beiden Zwischenspeichern (20a, 20c) eine Vorlagenzuführvorrichtung (1, 6, 14, 15) des Paginierers (4) sowie die Belichtungseinrichtung stillsetzbar sind.

**Claims**

1. Method of monitoring the filming of documents (2) in a microfilm camera having a paging device (4) and an exposure station (17), wherein the documents are first provided with numerical sequences in the paging device and are then filmed in the exposure station, with one blip for each film frame of a document being exposed on the film and a comparison being made in a comparison device to ascertain a match between the documents and the associated film frames of the documents and in the absence of a match an error signal being produced, characterized in that

- in the paging device (1) the numerical sequences are selected in dependence upon the nature of the composition of the documents from various ranges of numbers,

- that a preset blip type or a blip type combination arising from exposure of corresponding blips is associated with each range of numbers in the exposure station (at 17),

- that, as the documents run through, each range of numbers upon each actuation of the paging device (1) are entered as document signals (e.g. O, K, M, L) into a paging device evaluation circuit (11b) and each associated blip type or each blip type combination upon the subsequent blip exposure are entered as blip signals (e.g. O, K, M, L) into an exposure station evaluation circuit (11d) in suitably coded signal form (e.g. ASCII code),

- that the document signals of each range of numbers and the associated blip signals are in each case stored in an associated intermediate memory (20a, 20c),

- that the comparison for matching is effected in the comparison device (20b) in each case after storage of a preset number (e.g. 25) of coded document signals and blip signals, and

- that, on determining a match, the intermediate memories (20a, 20c) are reset.

2. Method according to claim 1, characterized in that at least some of the ranges of numbers and the associated blip types or blip type combinations are initiated by control cards sent ahead of the documents, and that the comparison for a match is effected after a control card has run through

3. Method according to claim 1 or 2, characterized in that, in the case of a plurality of ranges of numbers and associated blip types or blip type combinations, the comparison for a match is effected for all the document signals and blip signals of each of the ranges of numbers and blip types.

4. Method according to one of the preceding claims, characterized in that, after the preset number of documents (2) has run through, before comparing the document signals stored in the two intermediate memories (20a, 20c) with the coded blip signals, the document feed into the paging device (4) is interrupted.

5. Method according to claim 4, characterized in that, in the event that the document signals and the blip signals stored in the two intermediate memories (20a, 20c) do not match, the document feed remains interrupted, the paging device (4) and the microfilm camera are switched off and/or an alarm signal is triggered as an error signal.

6. Method according to one of the preceding claims, characterized in that the comparison for a match is effected for a control card and/or for the preset number of documents after a waiting period, after which the control card or the last document has left the exposure station.

7. Microfilm camera for effecting the method according to one of the preceding claims, having a paging device (4) for raising numerical sequences from various ranges of numbers, having an exposure station (17) containing a blip exposure device for filming the documents as well as for exposing blips for the film frames of the documents, having a storage device as well as having a comparison device, characterized in that different blip types or blip type combinations may be exposed according to the ranges of numbers, that the paging device (4) and the blip exposure device (at 17) are each connected to one evaluation circuit (11b, 11d) of the comparison device, to which may be signalled coded document signals from the paging device (4) and coded blip signals from the blip exposure device (at 17), that each evaluation circuit (11b, 11d) is connected to an intermediate memory (20a, 20c) of the comparison device (20), that the document and blip signals supplied by the associated evaluation circuit (11b, 11c) may be stored in each of the intermediate memories (20a, 20c), and that the intermediate memories (20a, 20c) are connected to a comparator (20b) of the comparison device in which, after a preset number of documents (2) has run through, the document signals and blip signals stored in the two intermediate memories (20a, 20c) may be checked for a match.

8. Microfilm camera according to claim 7, characterized in that the different ranges of numbers and their associated blips may be initiated by control cards, which are in each case presented in advance of a preset number of documents of a document stack or part of a document stack, that scanning devices enabling both document identification as such and control card identification, e.g. bar-code readers (10a, 10b or 18a, 18b), are associated one with the paging device (4) and one with the blip exposure device (at 17) and are each connected via the relevant evaluation circuit (11b, 11d) to one of the intermediate memories (20a, 20c).

9. Microfilm camera according to claim 7, characterized in that different ranges of numbers and their associated blips of blip types or blip type combination may be initiated manually via keyboards, that scanning devices (10a and 18a) (e.g. light barriers), which identify documents (2) running through, are associated one with the paging device (4) and one with the blip exposure device (at 17) and are each connected via one of the evaluation circuits (11b, 11d) to one of the intermediate memories (20a, 20c).

10. Microfilm camera according to one of claims 7 to 9, characterized in that keyboards (12a and 12b) for manually entering the start of a document stack or part of a document stack are connected one to each of the evaluation circuits (11b, 11d).

11. Microfilm camera according to one of claims 7 to 10, characterized in that a control,device (11, 11a, 11b) is provided, by means of which audible or visual alarm signals may be triggered in the event that the document signals and associated blip signals (e.g. ASCII characters) in the two intermediate memories (20a, 20c) do not match.

12. Microfilm camera according to one of claims 7 to 10, characterized in that a control device (11, 11a, 11c) is provided, by means of which a document feed device (1, 6, 14, 15) of the paging device (4) as well as the exposure device may be stopped in the event that the document signals and associated blip signals (e.g. ASCII characters) in the two intermediate memories (20a, 20c) do not match.

**Revendications**

1. Procédé de contrôle de l'enregistrement sur film d'originaux (2) dans une caméra à microfilm présentant un numéroteur (4) et une unité d'exposition (17), les originaux étant d'abord numérotés dans le numéroteur et filmés ensuite dans l'unité d'exposition, un pavé optique étant apposé sur le film pour chaque image d'un original et une comparaison étant effectuée dans un dispositif de comparaison au niveau de la concordance des originaux avec les images correspondantes des originaux et un signal d'erreur étant émis en cas de non-concordance, caractérisé en ce que

- les suites de numéros sont sélectionnées dans le numéroteur (1) parmi différentes gammes de numéros en fonction du type de composition des originaux,
- un type de pavé optique prédéfini ou une combinaison de types de pavé optique correspondent respectivement aux gammes de numéros dans l'unité d'exposition (en 17) par exposition des pavés optiques correspondants,

- lors du passage des originaux, chaque gamme de numéros est introduite comme signaux d'originaux (par ex. 0, K, M, L) dans un circuit d'analyse (11b) de numéroteur à chaque actionnement du numéroteur (1) et chaque type de pavé optique correspondant ou chaque combinaison de types de pavé optique sont introduits comme signaux de pavé optique (par ex. 0, K, M, L) dans un circuit d'analyse (11d) d'unité d'exposition sous forme de signaux codés en conséquence (par ex. code ASCII),
- les signaux d'originaux de chaque gamme de numéros et les signaux de pavés optiques correspondants sont sauvés chacun dans une mémoire temporaire qui leur correspond (20a, 20c),
- la comparaison pour vérifier la concordance s'effectue dans le dispositif de comparaison (20b) respectivement après l'enregistrement d'un nombre prédéfini (par ex. 25) de signaux d'originaux et de signaux de pavés optiques codés, et
- les mémoires temporaires (20a, 20c) sont remises à zéro lorsqu'on constate une concordance.

2. Procédé suivant la revendication 1, caractérisé en ce qu'au moins quelques-unes des gammes de numéros et des types de pavé optique correspondants ou des combinaisons de types de pavé optique sont établies par les cartes de commande qui précèdent les originaux et en ce que la comparaison pour vérifier la concordance s'effectue après le passage d'une carte de commande.

3. Procédé suivant la revendication 1 ou 2, caractérisé en ce que, dans le cas de plusieurs gammes de numéros et de types de pavé optique ou de combinaisons de types de pavé optique correspondants, la comparaison pour vérifier la concordance s'effectue respectivement pour l'ensemble des signaux d'originaux et des signaux de pavé optique des gammes de numéros et des types de pavé optique.

4. Procédé suivant l'une des revendications qui précèdent, caractérisé en ce que l'alimentation en originaux dans le numéroteur (4) est interrompue après le passage du nombre prédéfini d'originaux (2) avant la comparaison des signaux d'originaux sauvés dans les deux mémoires temporaires (20a, 20c) avec les signaux de pavé optique codés.

5. Procédé suivant la revendication 4, caractérisé en ce qu'en cas de différence entre les signaux d'originaux et les signaux de pavés optiques sauvés dans les deux mémoires temporaires (20a, 20c), l'alimentation en originaux reste interrompue, le numéroteur (4) et la caméra à microfilm sont mis hors service et/ou un signal d'alarme est déclenché pour signaler une erreur.

6. Procédé suivant l'une des revendications qui précèdent, caractérisé en ce que la comparaison pour vérifier la concordance pour une carte de commande et/ou pour le nombre prédéfini d'originaux s'effectue après un délai d'attente au bout duquel la carte de commande ou le dernier original ont quitté l'unité d'exposition.

7. Caméra à microfilm pour l'exécution du procédé suivant l'une des revendications qui précèdent, avec numéroteur (4) pour apposer des suites de numéros provenant de différentes gammes de numéros, avec une unité d'exposition (17) comprenant un dispositif d'exposition pour les pavés optiques pour filmer les originaux ainsi que pour exposer les pavés optiques pour les images des originaux sur le film, avec un dispositif à mémoire ainsi qu'avec un dispositif de comparaison, caractérisée en ce que différents types de pavé optique ou des combinaisons de types de pavé optique peuvent être exposés en fonction des gammes de numéros, en ce que le numéroteur (4) et le dispositif d'exposition des pavés optiques (en 17) sont reliés chacun à un circuit d'analyse (11b, 11d) du dispositif de comparaison, en ce que les signaux d'originaux codés peuvent être signalés par le numéroteur (4) et les signaux de pavés optiques codés par le dispositif d'exposition des pavés optiques (en 17), en ce que chaque circuit d'analyse (11b, 11d) est relié à une mémoire temporaire (20a, 20c) du dispositif de comparaison (20), en ce que les signaux d'originaux et de pavés optiques envoyés par le circuit d'analyse correspondant (11b, 11c) sont mémorisables dans chacune des mémoires temporaires (20a, 20c) et en ce que les mémoires temporaires (20a, 20c) sont reliées à un comparateur (20b) du dispositif de comparaison dans lequel les signaux d'originaux et les signaux de pavés optiques sauvés dans les deux mémoires temporaires (20a, 20c) peuvent être contrôlés après le passage d'un nombre prédéterminé d'originaux (2) pour vérifier qu'ils sont semblables.

8. Caméra à microfilm suivant la revendication 7, caractérisée en ce que les gammes différentes de numéros et les pavés optiques qui y correspondent peuvent être déclenchés par des cartes de commande qui précèdent respectivement un nombre prédéfini d'originaux d'une pile d'originaux ou d'une partie de pile d'originaux, en ce que sont affectés au numéroteur (4) et au dispositif d'exposition des pavés optiques (en 17) des dispositifs de lecture respectifs permettant à la fois une détection des originaux en soi et une détection des cartes de commande, par ex. un lecteur de codes à barres (10a, 10b ou 18a, 18b) reliés respectivement à l'une des mémoires temporaires (20a, 20c) par l'intermédiaire du circuit d'analyse respectif (11b, 11d).

9. Caméra à microfilm suivant la revendication 7, caractérisée en ce que des gammes de numéros différentes et les pavés optiques des types de pavé optique ou des combinaisons de types de pavé optique qui y correspondent peuvent être déclenchés manuellement par des claviers, en ce qu'un dispositif de lecture (10a ou 18a) (par ex. un barrage photo-électrique) détectant les originaux (2) qui passent et relié respectivement à l'une des mémoires temporaires (20a, 20c) par l'intermédiaire d'un des circuits d'analyse (11b, 11d) correspond au numéroteur (4) et au dispositif d'exposition des pavés optiques (en 17).

10. Caméra à microfilm suivant l'une des revendications 7 à 9, caractérisée en ce qu'un clavier (12a ou 12b) pour l'introduction manuelle du début d'une pile d'originaux ou d'une partie de pile d'originaux est relié à chacun des circuits d'analyse (11b, 11d).

11. Caméra à microfilm suivant l'une des revendications 7 à 10, caractérisée en ce qu'est prévu un dispositif de commande (11, 11a, 11b) qui permet de déclencher des signaux d'alarme acoustiques ou optiques en cas de nonconcordance des signaux d'originaux et des signaux de pavés optiques correspondants (par ex. des caractères ASCII) dans les deux mémoires temporaires (20a, 20c).

12. Caméra à microfilm suivant l'une des revendications 7 à 10, caractérisée en ce qu'est prévu un dispositif de commande (11, 11a, 11b) qui permet d'arrêter un dispositif d'alimentation en originaux (1, 6, 14, 15) du numéroteur (4) ainsi que le dispositif d'exposition en cas de nonconcordance des signaux d'originaux et des signaux de pavés optiques correspondants (par ex. des caractères ASCII) dans les deux mémoires temporaires (20a, 20c).

Fig. 1

EP 0 258 745 B1

```
         ┌─────────────────┐
         │      Start      │────── 40
         └─────────────────┘
                  │
                  ▼
   ┌──────────────────────────────┐
   │ Die Vergleichseinrich =      │
   │ tung (20b) erkennt die       │────── 41
   │ Elektronik für die Ka=       │
   │ mera (11c,11d) und den       │
   │ Pagierer (11a,11b)           │
   └──────────────────────────────┘
                  │
                  ▼
   ┌──────────────────────────────┐
   │ Antrieb (30)  für            │
   │ Vorlagenzuführvor =          │────── 42
   │ richtung einschalten         │
   └──────────────────────────────┘
                  │
                  ▼
   ┌──────────────────────────────┐
   │ Vergleichsrate               │────── 43
   │ einstellen                   │
   └──────────────────────────────┘
                  │
                  ▼
         ┌─────────────────┐
         │     Empfang     │────── 44
         └─────────────────┘
```

Fig. 2a

Fig. 2b

Vergleich — 49

Antrieb (30) ausschalten — 65

Aus= räumzeit (2,5 sec) =∅ — 66 — nein

ja

An= zahl L in(20a) = L in(20c) — 67 — nein → L – Fehler merken — 68

ja

An = zahl M in(20a) = M in(20c) — 69 — nein → M – Fehler merken — 70

ja

An = zahl K in(20a) = K in(20c) — 71 — nein → K – Fehler merken — 72

ja

An= zahl 0 in(20a) = 0 in(20c) — 73 — nein → 0 – Fehler merken — 74

ja

L-,M-,K und 0- Zwischenspei= cher in (20a) u. (20c) löschen — 75

Auswertung — 76

Fig. 2c

17

Fig. 2d